# EUROPÄISCHE PATENTSCHRIFT

(11) **EP 0 940 406 B1**
(45) Veröffentlichungstag und Bekanntmachung des Hinweises auf die Patenterteilung: **13.11.2002**
(21) Anmeldenummer: 99102347.4
(22) Anmeldetag: 06.02.1999
(51) Int. Cl.: C07F 9/09, B01F 17/00, C08G 18/28, C09B 67/00

(54) **Phosphorsäureester und ihre Verwendung als Dispergiermittel**
Phosphoric acid esters and their use as dispersing agent
Esters d'acide phosphorique et leur utilisation comme agent dispersant

(30) Priorität: 19.02.1998 DE 19806964
(43) Veröffentlichungstag der Anmeldung: 08.09.1999
(73) Patentinhaber: Goldschmidt AG, 45127 Essen (DE)
(72) Erfinder: Boinowitz, Tammo, Dr., 45131 Essen (DE); Esselborn, Eberhard, 45147 Essen (DE); Knebelkamp, Arno, Dr., 45133 Essen (DE); Psiorz, Christian, Dr., 45136 Essen (DE); Silber, Stefan, Dr., 47804 Krefeld (DE); Stadtmüller, Stefan, Dr., 45309 Essen (DE); Wallhorn, Ellen, 45239 Essen (DE)

(56) Entgegenhaltungen:
- EP-A- 0 256 427
- EP-A- 0 764 695
- DE-A- 19 731 572

## Beschreibung

Die vorliegende Erfindung betrifft Phosphorsäureester,
a) welche durch Umsetzung eines ω-hydroxyfunktionellen Oligooder Poly(alkyl)styrols mit einem Alkylenoxid zu einem Poly(alkyl)styrol-block(b)-Polyalkylenoxid-Copolymeren und anschließender Überführung in die entsprechenden Phosphorsäureester mit einer phosphorsäureesterbildenden Phosphorverbindung erhältlich sind, wobei bis zu 100 % der terminalen Hydroxylgruppen dieser Poly(alkyl)styrol-block(b)-Polyalkylenoxid-Copolymeren zu Phosphorsäureestergruppen umgesetzt werden und die Phosphoratome, abhängig von den gewählten stöchiometrischen Verhältnissen, ein- und/oder zweifach verestert werden,
   oder
b) basierend auf Polystyroloxid-block(b)-Polyalkylenoxid-Copolymeren, welche ausgehend von einem monofunktionellen Startalkohol durch sequentielle Anlagerung von Styroloxid und einem Alkylenoxid gemäß der gewünschten Abfolge und Kettenlänge der einzelnen Segmente erhältlich sind und nachfolgend zu den entsprechenden Phosphorsäureestern, wie in a) beschriebener Weise, umgesetzt werden.

Darüber hinaus betrifft die Erfindung die Herstellung dieser Phosphorsäureester und ihre Verwendung als Dispergiermittel für Pigmente und Füllstoffe.

Für die Dispergierung von Füllstoffen und Pigmenten in flüssigen Medien bedient man sich in der Regel der Zuhilfenahme von Dispergiermitteln, um so die für eine effektive Dispergierung der Feststoffe benötigten mechanischen Scherkräfte herabzusetzen und gleichzeitig möglichst hohe Füllgrade zu realisieren.

Die Dispergiermittel unterstützen das Aufbrechen von Agglomeraten, benetzen bzw. belegen als oberflächenaktive Materialien die Oberfläche der zu dispergierenden Partikel und stabilisieren diese gegen eine unerwünschte Reagglomeration.

Unverzichtbar geworden sind Dispergiermittel z. B. für die Herstellung von hochkonzentrierten Farbpasten für die Lack- und Farbenindustrie, zur Darstellung von Pigmentkonzentraten (Masterbatch) für die Einfärbung von Kunststoffartikeln und für die Verarbeitung von ungesättigten Polyesterharzen (UP-Harze), die große Mengen Calciumcarbonat oder Aluminiumhydroxid (ATH) als Füllstoffe enthalten.

Die Kombination sehr hoher Füllgrade, gepaart mit einer möglichst niedrigen Viskosität, ist für die Hersteller und Verarbeiter dieser Produkte primär aus ökonomischen Gründen von besonderem Interesse. Im Falle der Füllstoffe stellen diese üblicherweise die preiswerteste Formulierungskomponente dar; Pigmentkonzentrate wollen vom Kunststoffverarbeiter möglichst hochkonzentriert, d. h. tunlichst ohne zusätzliche Trägermaterialien, für die Einfärbung eingesetzt werden.

Phosphorsäureester und ihre Verwendung als Dispergiermittel sind bekannt und dem Stand der Technik zu entnehmen. So werden in der US-A-4 720 514 Phosphorsäureester einer Reihe von Alkylphenolethoxylaten beschrieben, die vorteilhaft zur Formulierung wäßriger Pigmentdispersionen eingesetzt werden können. Phosphorsäureester für eine ähnliche Anwendung beschreibt EP-A-0 256 427. In den Schriften US-A-5 130 463 und US-A-5 151 218 wird über Phosphorsäureester auf Basis hydroxyterminierter Polyadditions- bzw. Polykondensationsprodukte berichtet, die für die Herstellung hochgefüllter Polyester-Formmassen, im besonderen für SMC- und BMC-Formulierungen (SMC = sheet molding compounds; BMC = bulk molding compounds), Verwendung finden. Bifunktionelle Phosphorsäureester, hergestellt über die Mannich-Moedritzer-Reaktion, und deren Adsorptionscharakteristika auf Calciumcarbonat beschreibt J. Appl. Polym. Sci. 65, 2545 (1997).

Die bekannten Phosphorsäureester haben jedoch den Nachteil, daß sie in der Regel nicht universell einsetzbar sind, da es vielfach an einer ausreichenden Kompatibilität von Dispergieradditiv und Bindemittel bzw. Dispergieradditiv und umgebendem Medium (wäßrige oder lösungsmittelhaltige Formulierungen) mangelt. Auch spielt der chemische Aufbau der Phosphorsäureester eine große Rolle: In wäßrigen Formulierungen werden bevorzugt nur solche Phosphorsäureester eingesetzt werden, die keine zusätzlichen hydrolysierbaren funktionellen Gruppen, wie Esteroder Urethangruppen, im Molekül aufweisen. Häufig sind hohe Zusätze an Dispergieradditiven erforderlich, um das Auftreten von Agglomeraten zu unterdrücken; die erreichbaren Füllgrade sind unbefriedigend niedrig, die Stabilität der Dispersionen und damit deren Viskositätskonstanz ist oft unzureichend, Flokkulation und Aggregation lassen sich nicht immer vermeiden, so daß es zu einer sichtbaren Separation sowie zu Verlaufs- und Oberflächenstörungen kommen kann.

Der vorliegenden Erfindung liegt daher die Aufgabe zugrunde, eine Vielzahl der genannten Nachteile zu überwinden, wobei neben der für die Verarbeitbarkeit wichtigen Viskositätsreduktion von hochgefüllten Dispersionen eine verbesserte Kompatibilität mit dem umgebenden Medium erreicht werden soll.

Dies gelingt überraschenderweise durch den Einsatz von Phosphorsäureestern amphiphiler Blockcopolymere, die als charakteristisches Strukturmerkmal ein Poly(alkyl)styrol- bzw. ein Polystyroloxid-Segment aufweisen, an welches ein Polyalkylenoxid-Segment angeknüpft ist.

Gegenstand der Erfindung sind demgemäß Phosphorsäureester der allgemeinen Formel I 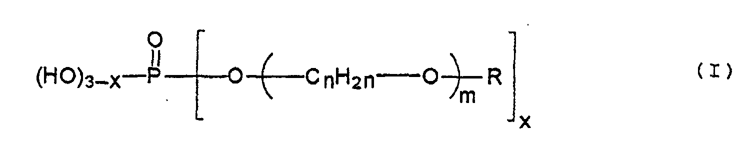 wobei
- R =: 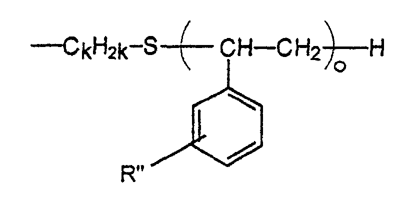 oder 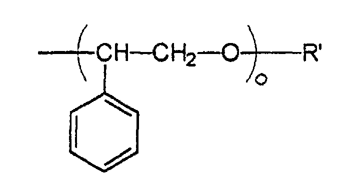 ist,
- x: gleich 1 oder 2,
- n: eine Zahl von 2 bis 18,
- m: und
- o: eine Zahl von 2 bis 100,
- k: eine Zahl von 2 bis 4,
- R": H oder einen linearen oder verzweigten Alkylrest, der gegebenenfalls mit zusätzlichen funktionellen Gruppen substituiert sein kann, und
- R': einen Alkyl-, Alkaryl-, Alkenyl- oder Sulfopropylrest
bedeuten.

Bevorzugt ist R" = H.

R' ist gewöhnlich abgeleitet von einem Alkohol R'OH, der als Startalkohol für die Polymerisation des Styroloxids und Alkylenoxids fungiert.

Beispiele für die Reste R' sind der Methyl-, Butyl-, Stearyl-, Allyl-, Hexenyl-, Nonylphenyl- oder Oleylrest.

Bevorzugt für R' sind Methyl- und Butylreste.

Ist n = 2, enthält der Polyetherrest ausschließlich Ethylenoxideinheiten. Ist der Wert für n > 2, besteht der Polyetherrest aus Ethylenoxideinheiten und anteilig aus Oxyalkyleneinheiten, deren Kohlenstoffzahl zwischen 3 und 18 liegt. Dabei kann n den Wert einer gebrochenen Zahl zwischen 2 und 18 annehmen. Vorzugsweise besteht der Oxyalkylenblock aus Ethylenoxideinheiten, wobei gegebenenfalls zusätzlich zu den Oxypropylenauch Oxybutyleneinheiten vorhanden sein können. Oxyalkyleneinheiten mit einer Kohlenstoffzahl von 4 bis 18 sind dann bevorzugt, wenn zusätzlich oleophile Eigenschaften des Produktes angestrebt werden.

Das mittlere Molekulargewicht der erfindungsgemäßen Phosphorsäureester liegt im Bereich von 300 bis etwa 15 000 g/Mol, bevorzugt bei 500 bis 5000 g/Mol. Es läßt sich sehr leicht mit den gängigen Methoden der Polymeranalytik, sowohl für die Phosphorsäureester als auch für die amphiphilen Blockcopolymeren, bestimmen. Das Verhältnis von m zu o beträgt 1 zu 50 bis 50 zu 1, bevorzugt 1 zu 10 bis 10 zu 1 und besonders bevorzugt 1 zu 2 bis 10 zu 1.

Beispiele geeigneter Phosphorsäureester sind:

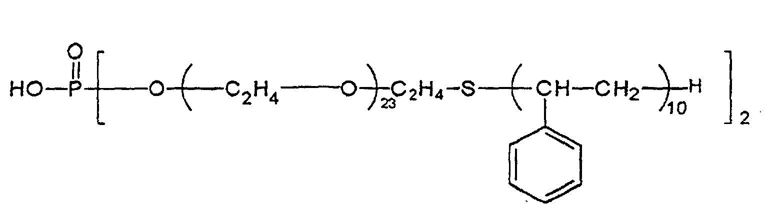

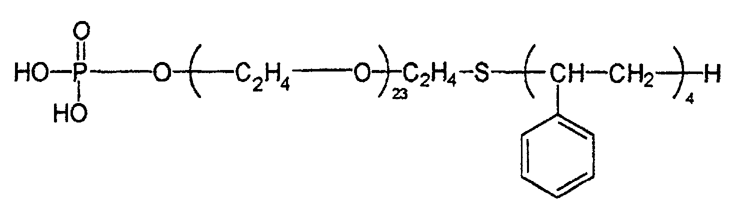

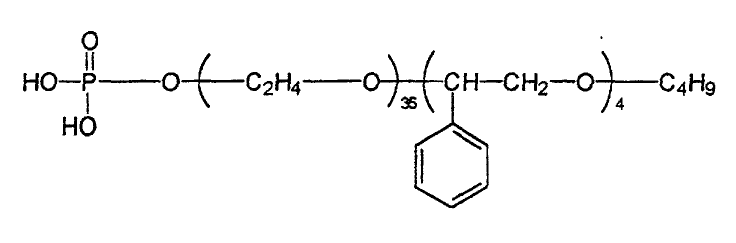

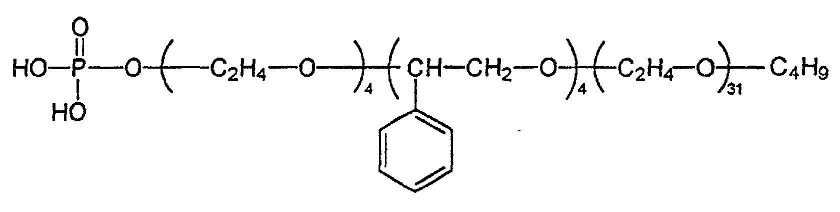

Als Ausgangsmaterialien zur Herstellung der erfindungsgemäßen Phosphorsäureester dienen demnach amphiphile Blockcopolymere der allgemeinen Strukturen 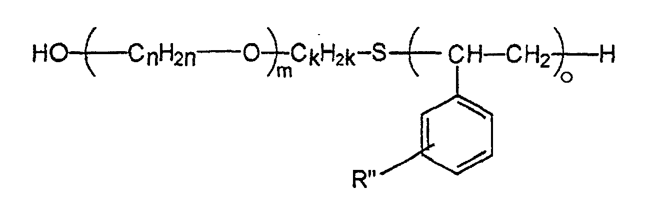 bzw. 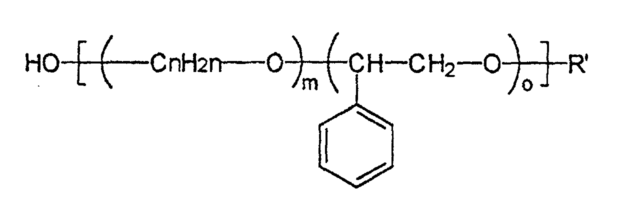 wobei die Reste R" und R' sowie die Indices m, k und n und o die oben angegebene Bedeutung haben.

Diese Blockcopolymere werden durch Reaktion der terminalen Hydroxygruppe mit einer phosphorsäureesterbildenden Phosphorverbindung zu den erfindungsgemäßen Phosphorsäureestern umgesetzt.

Derartige Blockcopolymere sind z. B. in der DE-A-41 34 967 beschrieben. Zur Darstellung der Polystyrol-b-Polyalkylenoxid-Copolymeren des Typs A-B wird zunächst Styrol in Gegenwart ausreichender Mengen eines Initiators und der gewünschten Kettenlänge entsprechenden Menge eines Kettenreglers, welcher neben einer Mercaptogruppe noch eine weitere, einen aktiven Wasserstoffrest aufweisende, funktionelle Gruppe, in der Regel eine Hydroxylgruppe, trägt, radikalisch polymerisiert und an das erhaltene Polymerisat bei Temperaturen von 20 bis 180 °C Alkylenoxid bis zum Erreichen des gewünschten Molekulargewichts des Blocks B addiert.

Zur Darstellung der entsprechenden Polystyroloxid-b-Polyalkylenoxid-Copolymeren werden ausgehend von dem Startalkohol R'OH die entsprechenden Alkylenoxide gemäß der gewünschten Abfolge und Kettenlänge der einzelnen Segmente sequentiell addiert, so daß ein blockartiger Aufbau resultiert.

Beide synthetische Routen führen zu amphiphilen Blockcopolymeren mit einer terminalen Hydroxylgruppe, die beide als ein zusätzliches, charakteristisches Strukturelement ein hydrophobes Segment enthalten, welches aus aromatischen Gruppen aufgebaut ist. Die beschriebenen Verfahren erlauben es in einfacher Weise, die Kettenlängen m und o der einzelnen Segmente, das Gesamtmolekulargewicht sowie das Verhältnis m/o von aromatischen zu nichtaromatischen Segmenten den anwendungstechnischen Erfordernissen anzupassen. So kommen für Anwendungen in wäßrigen Systemen bevorzugt Produkte zum Einsatz, deren Polyalkylenoxidsegment aus Ethylenoxid-Einheiten aufgebaut ist. Umgekehrt haben sich für Dispergierprozesse in einer sehr hydrophoben Umgebung, wie beispielsweise Paraffinölen oder in einer Polyolefinschmelze, besonders Produkte mit einem höheren Anteil an Styrol- bzw. Styroloxid-Einheiten bewährt.

Die Umsetzung zu den erfindungsgemäßen Phosphorsäureestern erfolgt durch Reaktion der endständigen (terminalen) Hydroxylgruppen mit einer phosphorsäureesterbildenden Phosphorverbindung in an sich bekannter Weise. Geeignete Phosphorverbindungen sind zum Beispiel Phosphorpentoxid, Phosphorsäurechlorid oder Polyphosphorsäuren der allgemeinen Formel Hₙ₊₂PₙO₃ₙ₊₁. Besonders bevorzugt wird für die Darstellung der Phosphorsäureester eine kommerziell erhältliche Polyphosphorsäure (Merck) mit einem Gehalt von etwa 85 % P₄O₁₀ eingesetzt. Die Reaktion erfolgt in der Regel ohne Lösungsmittel bei Temperaturen von etwa 80 bis 100 °C. Zur Entfernung etwaig vorhandener Feuchtigkeitsspuren können zunächst mit einem inerten Lösungsmittel, wie beispielsweise Toluol oder Xylol, Reste von Wasser aus dem System entfernt werden, bevor die Umsetzung mit der Polyphosphorsäure erfolgt. Prinzipiell kann die Umsetzung aber auch in Gegenwart von Lösungsmitteln oder Lösungsmittelgemischen erfolgen. Dies ist immer dann von Vorteil, wenn die erfindungsgemäßen Phosphorsäureester entsprechend ihrer späteren Verwendung in inerten Lösungsmitteln oder Lösungsmittelgemischen formuliert werden müssen.

Die terminale, zu veresternde Hydroxylgruppe der amphiphilen Blockcopolymere wird in der Veresterungsreaktion bevorzugt zu 50 bis 100 %, besonders bevorzugt quantitativ verestert. Abhängig von der eingesetzten Menge der phosphorsäureesterbildenden Phosphorverbindung, bezogen auf das Hydroxyäquivalent der Blockcopolymere, werden dabei entweder bevorzugt Monoester, Diester oder Gemische von Mono- und Diester erhalten.

In Abhängigkeit von dem pH-Wert des Einsatzmediums können die erfindungsgemäßen Phosphorsäureester auch in partiell oder vollständig neutralisierter Form vorliegen.

Die Dispergiermittel können sowohl direkt auf die zu dispergierenden Feststoffe aufgebracht werden oder aber dem wäßrigen bzw. organischen Medium zugesetzt werden. Sie können in reiner Form oder als Masterbatch in höherer Konzentration in einem organischen Medium verteilt werden. Es ist selbstverständlich auch möglich, die erfindungsgemäß zu verwendenden Dispergiermittel zusammen mit weiteren Hilfsstoffen oder Dispergiermitteln, wie z. B. den als Dispergiermittel bekannten Stearaten, einzusetzen.

Als Feststoffe kommen mineralische Füllstoffe, wie Talkum, Calciumcarbonat, Dolomit, Glimmer, Wollastonit, Kaolin, sowie mineralische Flammschutzmittel, wie Aluminiumhydroxid oder Magnesiumhydroxid, in Frage. Geeignete Pigmente sind Ruß oder Titandioxid, wobei letzteres auch in feinverteilter Form als UV-Schutz in kosmetischen Formulierungen eingesetzt werden kann. Weitere dispergierbare Feststoffe sind chemische Treibmittel, wie Azodicarbonamid oder Mischungen von festen Säuren und Carbonaten.

Die erfindungsgemäß zu verwendenden Dispergiermittel können auch zur Dispergierung von keramischen Materialien in organischen Medien, wie z. B. feinteiliges Aluminiumoxid, Siliciumcarbid oder Siliciumnitrid, eingesetzt werden.

Als organische Medien kommen u. a. Polyethylen, Polypropylen, Polystyrol, Polyamide, Polyester, Poly(meth)acrylate, Polyvinylchlorid, ungesättigte Polyester und Paraffinöle in Frage.

Insbesondere eignen sich die erfindungsgemäßen Dispergiermittel zur Verbesserung der Verteilung von feinteiligen Feststoffen in Elastomeren, Thermoplasten, Duroplasten und Polymerblends.

Besonders bewährt haben sich die erfindungsgemäßen Phosphorsäureester als Dispergiermittel für die Herstellung hochgefüllter SMC- und BMC-Formassen. SMC (sheet molding compounds) und BMC (bulk molding compounds) bestehen aus ungesättigten Polyesterharzen, einer thermoplastischen Komponente, Glasfasern und Füllstoffen. Das ungesättigte Polyesterharz und die Thermoplastkomponente (oft wird Polystyrol als Thermoplastkomponente eingesetzt) sind üblicherweise in monomerem Styrol gelöst, welches bei der Verarbeitung im Preß- oder Spritzgießverfahren aushärtet und mit dem ungesättigen Polyesterharz eine dreidimensionale Netzwerksstruktur ausbildet. Der Zusatz von Glasfasern führt zu einer hohen Zugfestigkeit und Steifigkeit; die Füllstoffe garantieren eine hohe Druckfestigkeit und sind darüber hinaus für eine gute Maßhaltigkeit und eine geringe Wärmeausdehnung verantwortlich.

Mit den erfindungsgemäßen Phosphorsäureestern wird auch bei sehr hohen Füllgraden eine sehr niedrige Viskosität erzielt. Die Formulierungen zeichnen sich durch absolute Stippenfreiheit und eine hohe Lagerstabilität aus.

Darüber hinaus lassen sich die erfindungsgemäßen Phosphorsäureester zur Herstellung wäßriger Pigmentpasten verwenden. Hierzu werden 0,1 bis 200 Gew.-% der Phosphorsäureester, vorzugsweise 0,5 bis 100 Gew.-%, (bezogen auf das Gewicht der Pigmente) eingesetzt. Die Phosphorsäureester können bei der erfindungsgemäßen Verwendung entweder vorab mit den zu dispergierenden Pigmenten vermischt werden oder direkt in dem wäßrigen oder lösemittelhaltigen Dispergiermedium vor oder gleichzeitig mit der Zugabe der Pigmente und etwaiger Feststoffe gelöst werden.

Als Pigmente können in diesem Zusammenhang beispielsweise anorganische oder organische Pigmente sowie Ruße genannt werden.

Als anorganische Pigmente seien exemplarisch genannt Titandioxide und Eisenoxide. In Betracht zu ziehende organische Pigmente sind beispielsweise Azopigmente, Metallkomplex-Pigmente, anthrachinoide Pigmente, Phthalocyaninpigmente, polycyclische Pigmente, insbesondere solche der Thioindigo-, Chinacridon-, Dioxazin-, Pyrrolo-Pyrrol-, Naphthalintetracarbonsäure-, Perylen-, Isoamidolin(on)-, Flavanthron-, Pyranthron- oder Isoviolanthron-Reihe. Besonders bevorzugt eignen sich die erfindungsgemäßen Dispergieradditive zur Herstellung wäßriger (Gas-) Rußpasten.

Füllstoffe, die beispielsweise in wäßrigen Lacken dispergiert werden können, sind z. B. solche auf Basis von Kaolin, Talkum, anderen Silikaten, Kreide, Glasfasern, Glasperlen oder Metallpulvern.

Als Lacksysteme, in denen die erfindungsgemäßen Pigmentpasten aufgelackt werden können, kommen beliebige wäßrige 1K- oder 2K-Lacke in Betracht. Beispielhaft genannt seien wäßrige 1K-Lacke, wie solche auf Basis von Alkyl-, Acrylat-, Epoxid-, Polyvinylacetat-, Polyester- oder Polyurethanharzen, oder wäßrige 2K-Lacke, beispielsweise solche auf Basis von hydroxylgruppenhaltigen Polyacrylat- oder Polyesterharzen mit Melaminharzen oder gegebenenfalls blockierten Polyisocyanatharzen als Vernetzer. In gleicher Weise seien auch Polyepoxidsysteme genannt.

In den nachfolgenden Beispielen wird zunächst die Herstellung der erfindungsgemäß zu verwendenden Verbindungen beschrieben. Es folgen anwendungstechnische Beispiele zum Nachweis der Eigenschaften der erfindungsgemäß zu verwendenden Verbindungen und zum Vergleich dazu Eigenschaften, die mit einigen Produkten des Standes der Technik erzielt werden können.

Es ist verständlich und dem Fachmann geläufig, daß diese Beispiele nur eine Auswahl der vorhandenen Möglichkeiten darstellen und keineswegs als Beschränkung anzusehen sind.

### Herstellungsbeispiele

### 1) Herstellung von Polystyrol-b-Polyalkylenoxid-Copolymeren (analog DE-A-41 34 967, nicht erfindungsgemäß) als Ausgangsmaterialien für die Darstellung der entsprechenden erfindungsgemäßen Phosphorsäureester

### a) Herstellung eines Polystyrol-b-Polyalkylenoxid-Copolymeren (analog DE-A-41 34 967)

100 g Xylol werden unter einer Stickstoffatmosphäre in einem mit einem Rührer versehenen Reaktor auf 120 °C erhitzt. Dazu wird inerhalb von 3 h unter Beibehaltung der Temperatur von 120 °C ein Gemisch aus 1350 g (etwa 13 Mol), 78,1 g (1 Mol) 2-Mercaptoethanol, 4,1 g Azodiisobuttersäuredinitril und 310 g Xylol gegeben. Nach Beendigung der Zugabe erfolgt eine Nachreaktion von etwa 15 Minuten; anschließend werden 0,16 g Methylhydrochinon zugegeben.

Durch Destillation im Vakuum werden überschüssiges Monomer, Xylol und Restmengen 2-Mercaptoethanol entfernt und die verbleibende farblose, viskose Flüssigkeit abschließend mit Xylol auf einen Festkörpergehalt von etwa 80 % verdünnt.

Über die Hydroxylzahlbestimmung ergibt sich ein Molekulargewicht Mn von 700 g/Mol. Aus der dampfdruckosmometrischen Molekulargewichtsbestimmung wird ein Wert von 720 g/Mol erhalten.

Die Lösung von 700 g (etwa 1 Mol) des ω-hydroxyfunktionellen Polystyrols in 175 g Xylol und 35,0 g Kaliummethylat (etwa 0,5 Mol) werden in einen gut getrockneten Edelstahlreaktor gegeben, der zusätzlich mit einem Rührer versehen ist. Durch azeotrope Destillation werden sowohl Spuren von Wasser als auch Methanol zusammen mit Xylol entfernt. Danach wird auf eine Temperatur von 80 °C eingestellt und etwa 2000 g Ethylenoxid (etwa 45,5 Mol) unter Rühren so schnell zugegeben, daß die Reaktorinnentemperatur 85 °C und der Druck 6 bar nicht überschreiten. Nach vollständiger Einleitung des Ethylenoxids wird die Temperatur solange auf 80 °C gehalten, bis ein gleichbleibender Druck das Ende der Nachreaktion anzeigt. Das erhaltene Produkt wird mit 100 g Wasser versetzt und anschließend mit 30 % Phosphorsäure auf einen pH-Wert von 6 bis 7 gebracht. Die Entfernung des Wassers erfolgt durch azeotrope Destillation im Vakuum und die des ausfallenden Salzes durch Filtration.

Das aus der Bestimmung der Hydroxylzahl ermittelte Molekulargewicht bei einer angenommenen Funktionalität von 1 beträgt 2650; das Gelpermeationschromatogramm zeigt nur ein Maximum und ergibt für Mn (Eichung gegen PS) einen Wert von 3100, für das Verhältnis Mw/Mn erhält man 1,14.

### b) Herstellung des Phosphorsäureesters

2650 g (entspricht 1 OH-Äquivalent) des Blockcopolymeren werden im Reaktor vorgelegt und nach Zugabe von etwa 50 ml Toluol auf 120 °C erhitzt. Durch Anlegen von Vakuum werden alle flüchtigen Anteile, insbesondere evtl. im Produkt vorhandenes Wasser, aus dem Reaktionsraum destillativ entfernt. Nach dem Belüften mit Stickstoff temperiert man auf 80 °C und gibt 85 g der flüssigen Polyphosphorsäure (0,25 Mol P₄O₁₀; Hersteller: Merck; Gehalt als P₄O₁₀ berechnet: ca. 85 %) hinzu.

Nach 2 Stunden ist die Reaktion abgeschlossen. Die Säurezahl des erhaltenen Materials beträgt 41 mg KOH/g. Im ¹H-NMR-Spektrum ist keine aliphatische Hydroxylgruppe mehr nachweisbar.

Tabelle 1 zeigt Beispiele einiger Phosphorsäureester auf Basis einiger Polystyrol-b-Polyalkylenoxid-Copolymeren, wie sie nach dem obigen Herstellverfahren erhalten werden. In der Tabelle sind die Molekulargewichte des Polystyrolsegmentes sowie die chemische Natur und das Molekulargewicht des entsprechenden Alkylenoxids angegeben.

**Tabelle 1**

| Phosphorsäureester | Mn (Polystyrol-Segment)¹ | Mn (Polyalkylenoxid-Segment)¹ | Alkylenoxid |
|---|---|---|---|
| 1A | 700 | 2000 | EO² |
| 2A | 700 | 1000 | EO |
| 3A | 1000 | 1000 | EO |
| 4A | 1000 | 1000 | EO/PO³ (1:1)⁴ |
| 5A | 1000 | 4000 | EO |
| 6A | 400 | 1000 | EO |
| 7A | 400 | 1800 | EO |

| | | | |
|---|---|---|---|
| ¹ Die Berechnung des Molekulargewichtes erfolgt über die Bestimmung der Hydroxylzahl | | | |
| ² EO = Ethylenoxid | | | |
| ³ PO = Propylenoxid | | | |
| ⁴ Anlagerung einer Mischung von EO und PO; mit 1 : 1 ist das molare Verhältnis EO/PO bezeichnet | | | |

### 2) Herstellung von Polystyroloxid-b-Polyalkylenoxid-Copolymeren (nicht erfindungsgemäß) als Ausgangsmaterialien für die Darstellung der entsprechenden erfindungsgemäßen Phosphorsäureester

128 g (1,72 Mol) Butanol und 12,2 g (0,17 Mol) Kaliummethylat werden unter einer Stickstoffatmosphäre in einen Reaktor gegeben. Nach sorgfältiger Spülung mit Reinststickstoff wird auf 110 °C erhitzt, und es werden 854 g (7,1 Mol) Styroloxid innerhalb von einer Stunde zugegeben. Nach weiteren zwei Stunden ist die Anlagerung des Styroloxids beendet, erkennbar an einem Restgehalt von Styroloxid, der unter 0,1 % (GC) beträgt. Anschließend werden 2847 g (64,6 Mol) Ethylenoxid so schnell in den Reaktor dosiert, daß die Innentemperatur 120 °C und der Druck 6 bar nicht überschreiten. Nach vollständiger Einleitung des Ethylenoxids wird die Temperatur so lange auf 115 °C gehalten, bis ein konstanter Manometerdruck das Ende der Nachreaktion anzeigt. Schließlich werden bei 80 bis 90 °C die nicht umgesetzten Monomeren im Vakuum entfernt.

Das erhaltene Produkt wird mit Hilfe von Phosphorsäure neutralisiert und das Wasser durch Destillation, das entstandene Kaliumphosphat durch Filtration zusammen mit einem Filterhilfsmittel entfernt. Das Molekulargewicht aus der Bestimmung der Hydroxylzahl (Mn/OH-Zahl) bei einer angenommenen Funktionalität von 1 beträgt 1950.

### b) Herstellung des Phosphorsäureesters

Die Herstellung des Phosphorsäureesters erfolgt wie unter 1b) beschrieben.

Tabelle 2 zeigt Beispiele einiger Phosphorsäureester auf Basis von Polystyroloxid-b-Polyalkylenoxid-Copolymeren, wie sie nach dem obigen Herstellverfahren erhalten werden. In der Tabelle sind die Molekulargewichte des Polystyrolsegmentes sowie die chemische Natur und das Molekulargewicht des entsprechenden Alkylenoxids angegeben.

**Tabelle 2**

| Phosphorsäureester | Mn (Polystyroloxid-Segment)¹ | Mn (Polyalkylenoxid-Segment)¹ | Alkylenoxid |
|---|---|---|---|
| 1B | 450 | 1500 | EO² |
| 2B³ | 450 | 1500 | EO |
| 3B | 630 | 1100 | EO/BO⁴ (3:1)⁵ |

| | | | |
|---|---|---|---|
| ¹ Die Berechnung des Molekulargewichtes erfolgt über die Bestimmung der Hydroxylzahl | | | |
| ² EO = Ethylenoxid | | | |
| ³ Blockaufbau über 1. Ethylenoxid, 2. Styroloxid | | | |
| ⁴ BO = Butylenoxid | | | |
| ⁵ Anlagerung einer Mischung von EO und BO; mit 3 : 1 ist das molare Verhältnis EO/BO bezeichnet | | | |

### Anwendungstechnische Beispiele

Zur Überprüfung der Wirksamkeit der erfindungsgemäß zu verwendenden Dispergiermittel wird nach verschiedenen Methoden vorgegangen, die typische Anwendungen im Kunststoff- bzw. Lackbereich beschreiben.

### Methode 1:

Die Füllstoffe (bzw. Pigmente) werden mit einer Lösung des zu prüfenden Dispergiermittels in Toluol behandelt. Anschließend wird das Toluol abdestilliert und das oberflächenbehandelte Material im Vakuum getrocknet. In einer Ultra-Zentrifugalmühle (Siebgröße 0,5 mm) werden die so beschichteten Feststoffe auf jeweils gleiche Agglomeratgröße gemahlen. Anschließend werden die gemahlenen Feststoffe in Paraffinöl (30 cp) unter Verwendung einer Mizerscheibe zunächst 2 Minuten mit 2000 UPM und anschließend 3 Minuten mit 4000 UPM dispergiert. Für die Versuche nach der Methode 1 werden Calciumcarbonat und Aluminiumhydroxid beschichtet, und zwar
Calciumcarbonat (CaCO₃) mit 2 Gew.-% Dispergiermittel und
Aluminiumhydroxid (ATH) mit 1 Gew.-% Dispergiermittel

Die Messung der Viskositäten erfolgt mit einem Brookfield Spindelviskosimeter (Modell LVT) bei 23 °C und einer Drehzahl von 30 UPM mit Spindeln der Größe Nr. 3 bzw. Nr. 4. In der Tabelle 3 werden die Viskositäten der mit den entsprechenden Feststoffen gefüllten Paraffinöldispersionen angegeben.

**Tabelle 3**

| Phosphorsäureester | Füllstoff | Füllmenge [ % ] | Viskosität/ mPas |
|---|---|---|---|
| - | ATH/CaCO₃ | 45 | n.b. |
| 1A | CaCO₃ | 55 | 720 |
| 3A | CaCO₃ | 55 | 410 |
| 3A | ATH | 65 | 660 |
| 6A | CaCO₃ | 55 | 520 |
| Stearinsäure | CaCO₃ | 55 | 6900 |
| 1B | CaCO₃ | 55 | 560 |
| 3B | CaCO₃ | 55 | 820 |
| n.b. = nicht bestimmbar, da Dispersion hochviskos bis fest | | | |

### Methode 2:

Die Füllstoffe werden in einer vorgegebenen Mischung, die neben den weiteren Rezepturbestandteilen auch das Dispergiermittel enthält, unter Benutzung eines Rührmotors mit Dispergierscheibe (⌀ 50 mm) bei einer Umdrehungszahl von etwa 1000 (rpm) zugegeben.

Für die anwendungstechnischen Untersuchungen werden Mischungen gewählt, die

| | |
|---|---|
| 60 Teile | ungesättigtes Polyesterharz (Palapreg P 17-02 bzw. Palapreg P 14-01; Hersteller: BASF) |
| 40 Teile | Thermoplastkomponente (Palapreg H 814-01: Polystyrol, gelöst in Styrol oder Palapreg H 850-01: Polymethylmethacrylat, gelöst in Styrol; Hersteller: BASF) |
| 4,5 Teile | Zinkstearat |
| 1,5 Teile | t-Butylperbenzoat |
| 180 Teile | Füllstoff (Calciumcarbonat/Millicarb OG, Hersteller: Omya oder Aluminiumhydroxid/Martinal ON 310; Hersteller: Martinswerke) sowie |
| X Teile | erfindungsgemäßer Phosphorsäureester |

enthalten.

Die Messung der Viskositäten erfolgt in diesem Fall mit einem Brookfield Spindelviskosimeter (Modell DV-I) bei 23 °C und einer Drehzahl von 50 UPM mit einer Spindel des Typs RVT-7. Die Viskositäten werden nach einer Lagerzeit von 10 Minuten gemessen. In den Tabellen 4 bis 7 sind die Viskositäten für die verschiedenen Formulierungen, entsprechend den obigen Rezepturvarianten, dargestellt. In allen Fällen ist das Ausmaß der Viskositätsreduktion, welches mit den erfindungsgemäßen Dispergiermitteln zu erzielen ist, signifikant.

**Tabelle 4**

| (UP-Harz: Palapreg P 17-02/Thermoplastkomponente: Polystyrol/Füllstoff: Calciumcarbonat) | | |
|---|---|---|
| Phosphorsäureester | Menge/X Teile | Viskosität (mPas) |
| - | - | 81 000 |
| 2A | 1,8 | 29 000 |
| 3A | 1,8 | 44 500 |
| 5A | 1,8 | 51 500 |
| 6A | 1,8 | 21 000 |
| 7A | 0,9 | 28 500 |
| 7A | 1,8 | 18 000 |
| 7A | 2,7 | 16 000 |
| 1B | 1,8 | 18 500 |

**Tabelle 5**

| (UP-Harz: Palapreg P 14-01/Thermoplastkomponente: Polystyrol/Füllstoff: Calciumcarbonat) | | |
|---|---|---|
| Phosphorsäureester | Menge/X Teile | Viskosität (mPas) |
| - | - | 120 000 |
| 4A | 1,8 | 28 500 |
| 7A | 1,8 | 21 000 |
| 7A | 2,7 | 18 000 |
| 1B | 1,8 | 19 500 |
| 2B | 1,8 | 19 000 |

**Tabelle 6**

| (UP-Harz: Palapreg P 17-02/Thermoplastkomponente: Polystyrol/Füllstoff: ATH) | | |
|---|---|---|
| Phosphorsäureester | Menge/X Teile | Viskosität (mPas/10 UPM) |
| - | - | 240 000 |
| 4A | 1,8 | 50 500 |
| 7A | 1,8 | 33 000 |
| 7A¹ | 5,2 | 255 000 |
| 1B | 2,7 | 19 000 |
| 3B | 1,8 | 21 000 |

| | | |
|---|---|---|
| ¹ Formulierung enthält 350 Teile ATH / 5,2 Teile entsprechen so 1,5 % bezogen auf Füllstoff | | |

**Tabelle 7**

| (UP-Harz: Palapreg P 17-02/Thermoplastkomponente: Polymethylmethacrylat/Füllstoff: ATH) | | |
|---|---|---|
| Phosphorsäureester | Menge/X Teile | Viskosität (mPas) |
| - | - | 54 000 |
| 1A | 1,8 | 30 000 |
| 7A | 1,8 | 27 000 |
| 2B | 1,8 | 19 000 |

### Methode 3:

### Herstellung von Pigmentpasten

Zur Herstellung der Pigmentpasten werden die Dispergieradditive 40 %ig in Wasser vorgelöst, mit Wasser und gegebenenfalls Antischaummitteln gemischt und danach die Pigmente zugegeben. Die Dispergierung erfolgt nach Zugabe von Mahlkörpern (Glaskugeln 2 bis 3 mm, gleiches Volumen wie die Pigmentpaste) eine (Titandioxid) bzw. zwei Stunden (sonstige Pigmente) in einem Skandex-Rüttler mit Luftkühlung.

### Formulierung der Weißpasten

Die Weißpasten werden wie folgt formuliert (Angaben in Gew.-%):

| | |
|---|---|
| 16,4 | Wasser |
| 12,3 | Additiv-Lösung, 40 %ig |
| 1,0 | Entschäumer (z. B. Tego Foamex 810, Tego Chemie Service GmbH) |
| 70,0 | Titandioxid 2160 (Kronos) |
| 0,3 | Aerosil A 200 (Degussa) |

### Formulierung der Schwarzpasten

Die Schwarzpasten werden wie folgt formuliert (Angaben in Gew.-%):

| | |
|---|---|
| 60,3 | Wasser |
| 22,3 | (Dispergier-)Additiv-Lösung, 40 %ig |
| 1,0 | Entschäumer (z. B. Tego Foamex 810, Tego Chemie Service GmbH) |
| 1,4 | 2-Amino-2-methylpropanol (Angus) |
| 15,0 | Farbruß FW 200 (Degussa) |

### Prüflacke

Einbrenn-Klarlack auf Basis eines modifizierten Alkydharzes (Angaben in Gew.-%) :

| | |
|---|---|
| 70,88 | Alkydharz Resydrol VWA 5477, 40 %ig (Hoechst) |
| 0,14 | Entschäumer (z. B. Byk 020, Byk-Chemie) |
| 0,68 | Verdicker Bentone SD 1 (Rheox) |
| 8,24 | Melaminharz Maprenal MF 900 (Hoechst) |
| 0,14 | Triethanolamin |
| 19,10 | Wasser |
| 0,68 | Entschäumer Additol XW 395 (Hoechst) |
| 0,14 | Verlaufmittel Additiol XW 329 (Hoechst) |

Pos. 1 vorlegen und die anderen Komponenten unter Rühren zugeben.

### Dispersions-Klarlack

| | |
|---|---|
| 97,0 | Acrylatdispersion Neocryl XK 90 (Zeneca) |
| 3,0 | Texanol |

Zur Herstellung grau pigmentierter Lacke werden je 40,0 g Klarlack vorgelegt, 14,2 g Weißpaste sowie 2,65 g Schwarzpaste zugegeben und bei 1500 Upm 5 min homogenisiert. Die Proben werden mit 100 µm Naßfilmdicke auf Aluminium-Bleche aufgerakelt und entweder nach 20 min Ablüftzeit 15 min bei 150 °C eingebrannt (Einbrennlack) oder bei Raumtemperatur getrocknet (Dispersionslack).

### Test der Pastenstabilitäten

Zur Ermittlung der Pastenstabilitäten werden bei zwei verschiedenen Schergefällen (20 1/s sowie 1000 1/s) die erreichbaren Anfangsviskositäten sowie die Viskositäten nach vierwöchiger Lagerung bei 50 °C bestimmt.

| Weißpasten | | | | |
|---|---|---|---|---|
| Probe | Viskosität/Pas sofort bei 20 1/s | Viskosität/Pas sofort bei 1000 1/s | Viskosität/Pas nach 4 Wo 50°C bei 20 1/s | Viskosität/Pas nach 4 Wo 50°C bei 1000 1/s |
| 1A | 3,0 | 0,6 | 3,4 | 0,7 |
| 2A | 3,1 | 0,5 | 3,3 | 0,4 |
| 3A | 3,3 | 0,7 | 3,5 | 0,7 |
| 4A | 3,0 | 0,5 | 3,2 | 0,5 |
| 5A | 3,6 | 0,6 | 3,8 | 0,7 |
| 6A | 3,1 | 0,4 | 3,2 | 0,4 |
| 7A | 3,3 | 0,5 | 3,4 | 0,6 |
| 1B | 3,6 | 0,5 | 3,8 | 0,5 |
| 2B | 3,5 | 0,6 | 3,6 | 0,6 |
| 3B | 3,4 | 0,4 | 3,3 | 0,5 |
| Polystyrol-b-Polyalkylenoxid-Copolymer Vorprodukt zu 1A | 3,3 | 0,4 | 3,7 | 0,4 |
| Polystyrol-b-Polyalkylenoxid-Copolymer Vorprodukt zu 3A | 3,5 | 0,6 | 3,8 | 0,7 |
| Fettsäure-Alkoxylat | 2,8 | 0,5 | 5,5 | 1,0 |
| mod. Acrylatpolymer | 4,2 | 1,3 | 6,8 | 1,9 |

| Schwarzpasten | | | | |
|---|---|---|---|---|
| Probe | Viskosität/dPas sofort bei 20 1/s | Viskosität/dPas sofort bei 1000 1/s | Viskosität/dPas nach 4 Wo 50°C bei 20 1/s | Viskosität/dPas nach 4 Wo 50°C bei 1000 1/s |
| 1A | 2,2 | 0,6 | 2,3 | 0,6 |
| 2A | 2,3 | 0,6 | 2,5 | 0,7 |
| 3A | 2,0 | 0,5 | 2,1 | 0,6 |
| 4A | 2,4 | 0,7 | 2,4 | 0,7 |
| 5A | 2,3 | 0,5 | 2,5 | 0,6 |
| 6A | 1,9 | 0,5 | 2,0 | 0,6 |
| 7A | 2,0 | 0,6 | 2,1 | 0,6 |
| 1B | 2,3 | 0,7 | 2,4 | 0,7 |
| 2B | 2,2 | 0,6 | 2,3 | 0,7 |
| 3B | 2,0 | 0,6 | 2,2 | 0,7 |
| Polystyrol-b-Polyalkylenoxid-Copolymer Vorprodukt zu 1A | 2,0 | 0,6 | 2,2 | 0,7 |
| Polystyrol-b-Polyalkylenoxid-Copolymer Vorprodukt zu 3A | 2,1 | 0,5 | 2,3 | 0,6 |
| Fettsäure-Alkoxylat | 1,8 | 0,4 | 2,5 | 0,6 |
| mod. Acrylatpolymer | 3,7 | 0,8 | 4,4 | 1,0 |

Aus dem jeweils nur geringen Viskositätsanstieg läßt sich die gute Stabilität der erfindungsgemäßen Pigmentpasten leicht erkennen.

### Test der Dispergiereigenschaften

Aufzug der Testformulierungen mit 100 µm Naßfilmdicke; nach 6 min Trocknung Rub-Out-Test auf 1/3 der Fläche; nach Einbrennen oder Trocknung über Nacht farbmetrische Vermessung der Aufzüge mittels eines Spektralphotometers Typ XP 68 der Fa. X-Rite; Bestimmung des Glanzgrades und -schleiers mittels Haze-Gloss der Fa. Byk-Gardner.

| Einbrennlack auf Basis Resydrol VWA 5477 | | | |
|---|---|---|---|
| Probe | Helligkeit L | Delta E nach Rub-Out | Glanzgrad (60°-Winkel) |
| 1A | 41,5 | 0,4 | 53 |
| 2A | 42,3 | 0,3 | 51 |
| 3A | 41,8 | 0,4 | 55 |
| 4A | 43,2 | 0,4 | 53 |
| 5A | 41,7 | 0,3 | 55 |
| 6A | 40,9 | 0,5 | 54 |
| 7A | 41,2 | 0,3 | 56 |
| 1B | 42,2 | 0,3 | 54 |
| 2B | 43,0 | 0,4 | 53 |
| 3B | 42,8 | 0,3 | 53 |
| Polystyrol-b-Polyalkylenoxid-Copolymer Vorprodukt zu 1A | 44,0 | 0,6 | 51 |
| Polystyrol-b-Polyalkylenoxid-Copolymer Vorprodukt zu 3A | 44,2 | 0,5 | 52 |
| Fettsäure-Alkoxylat | 44,6 | 0,7 | 49 |
| mod. Acrylatpolymer | 44,9 | 0,4 | 55 |

| Dispersionslack auf Basis Neocryl XK 90 | | | | |
|---|---|---|---|---|
| Probe | Helligkeit L | Delta E nach Rub-Out | Glanzgrad (60°-Winkel) | Haze |
| 1A | 47,5 | 0,3 | 40,5 | 110 |
| 2A | 47,6 | 0,4 | 42,0 | 115 |
| 3A | 47,3 | 0,5 | 41,0 | 110 |
| 4A | 47,9 | 0,3 | 39,0 | 120 |
| 5A | 47,6 | 0,4 | 42,0 | 125 |
| 6A | 47,7 | 0,5 | 41,5 | 115 |
| 7A | 47,5 | 0,4 | 42,0 | 110 |
| 1B | 48,0 | 0,4 | 40,5 | 120 |
| 2B | 48,2 | 0,5 | 39,0 | 110 |
| 3B | 48,1 | 0,4 | 42,5 | 125 |
| Polystyrol-b-Polyalkylenoxid-Copolymer Vorprodukt zu 1A | 48,3 | 0,7 | 39,0 | 120 |
| Polystyrol-b-Polyalkylenoxid-Copolymer Vorprodukt zu 3A | 48,4 | 0,8 | 39,5 | 125 |
| Fettsäure-Alkoxylat | 48,3 | 0,9 | 40,0 | 120 |
| mod. Acrylatpolymer | 49,0 | 0,4 | 40,5 | 130 |

Zu erkennen ist die durch den Einsatz der erfindungsgemäßen Dispergieradditive erzielbare günstige Farbstärkenentwicklung sowie der in allen Fällen günstige Rub-Out-Test.

Dies wird insbesondere auch deutlich im Vergleich zu den kommerziellen, nicht erfindungsgemäßen Beispielen, einem Fettsäurealkoxylat (Tego Dispers 740W, Tego Chemie Service) sowie einem modifizierten Acrylat (Tego Dispers 745W).

## Patentansprüche

1. Phosphorsäureester der allgemeinen Formel I 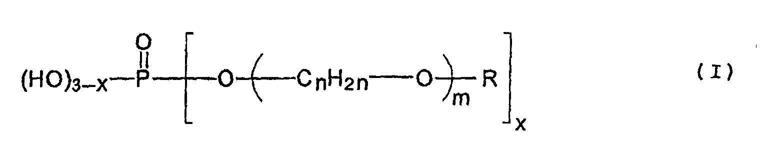 wobei
R = 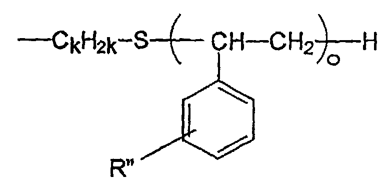 oder 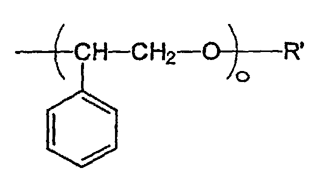 ist,
x gleich 1 oder 2,
n eine Zahl von 2 bis 18,
m und
o eine Zahl von 2 bis 100,
k eine Zahl von 2 bis 4,
R" H oder einen linearen oder verzweigten Alkylrest, der gegebenenfalls mit zusätzlichen funktionellen Gruppen substituiert sein kann, und
R' einen Alkyl-, Alkaryl-, Alkenyl- oder Sulfopropylrest
bedeuten.

2. Phosphorsäureester gemäß Anspruch 1, **dadurch gekennzeichnet, dass** das Verhältnis m/o 1 zu 10 bis 10 zu 1 beträgt.

3. Phosphorsäureester gemäß den Ansprüchen 1 und 2, **dadurch gekennzeichnet, dass** das mittlere Molekulargewicht 300 bis 15 000 g/Mol beträgt.

4. Phosphorsäureester gemäß den Ansprüchen 1 bis 3, **dadurch gekennzeichnet, dass** R" = H ist.

5. Verfahren zur Herstellung von Phosphorsäureestern gemäß den Ansprüchen 1 bis 4
a) durch Umsetzung eines ω-hydroxyfunktionellen Oligooder Poly(alkyl)styrols mit einem Alkylenoxid zu einem Poly(alkyl)styrol-block(b)-Polyalkylenoxid-Copolymeren und anschließender Überführung in die entsprechenden Phosphorsäureester mit einer phosphorsäureesterbildenden Phosphorverbindung, wobei bis zu 100 % der terminalen Hydroxylgruppen dieser Poly(alkyl)styrol-block(b)-Polyalkylenoxid-Copolymeren zu Phosphorsäureestergruppen umgesetzt werden und die Phosphoratome, abhängig von den gewählten stöchiometrischen Verhältnissen, einund/oder zweifach verestert werden,
oder
b) durch Umsetzung von Polystyroloxid-block(b)-Polyalkylenoxid-Copolymeren, welche ausgehend von einem monofunktionellen Startalkohol durch sequentielle Anlagerung von Styroloxid und einem Alkylenoxid gemäß der gewünschten Abfolge und Kettenlänge der einzelnen Segmente erhältlich sind, mit einer phosphorsäureesterbildenden Phosphorverbindung in der in a) beschriebenen Weise.

6. Verwendung der Phosphorsäureester nach den Ansprüchen 1 bis 4 als Dispergiermittel für Pigmente und Füllstoffe in wäßrigen oder organischen Medien.

7. Verwendung der Phosphorsäureester nach den Ansprüchen 1 bis 4 als Dispergiermittel für die Herstellung hochgefüllter SMC- (sheet molding compounds) und BMC- (bulk molding compounds) Formmassen.

8. Pigmentzubereitung aus anorganischen oder organischen Pigmenten, enthaltend 0,1 bis 200 Gew.-%, bezogen auf Pigmente, an Dispergieradditiven gemäß den Ansprüchen 1 bis 4.

9. Wäßrige Paste aus anorganischen oder organischen Pigmenten, enthaltend 0,1 bis 200 Gew.-%, bezogen auf Pigmente, an Dispergieradditiven gemäß den Ansprüchen 1 bis 4.

10. Wäßrige Rußpasten, enthaltend 0,1 bis 200 Gew.-%, bezogen auf Ruß, an Dispergieradditiven gemäß den Ansprüchen 1 bis 4.

## Claims

1. A phosphoric ester of the general formula I 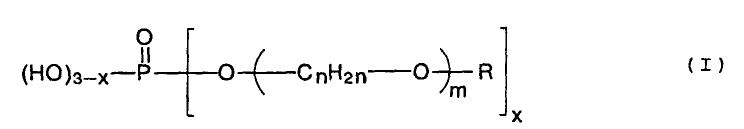 where
R = 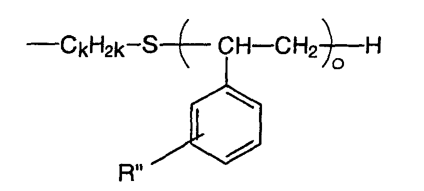 or 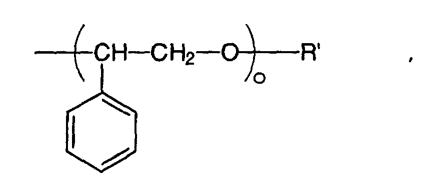
x is 1 or 2,
n is a number from 2 to 18,
m and
o are each a number from 2 to 100,
k is a number from 2 to 4,
R" is H or a linear or branched alkyl radical which may if desired be substituted by additional functional groups, and
R' is an alkyl, alkaryl, alkenyl or sulfopropyl radical.

2. A phosphoric ester as claimed in Claim 1, **characterized in that** the ratio m/o is from 1 : 10 to 10 : 1.

3. A phosphoric ester as claimed in Claim 1 or 2, **characterized in that** the average molecular weight is from 300 to 15,000 g/mol, in particular from 500 to 5000 g/mol.

4. A phosphoric ester as claimed in any one of Claims 1 to 3, **characterized in that** R"=H.

5. A process for preparing a phosphoric ester as claimed in any one of Claims 1 to 4
a) by reacting an ω-hydroxy-functional oligo- or poly(alkyl)styrene with an alkylene oxide to give a poly(alkyl)styrene-block(b)-polyalkylene oxide copolymer and then converting said copolymer into the corresponding phosphoric esters with a phosphorus compound which forms phosphoric esters, up to 100 % of the terminal hydroxyl groups of said poly(alkyl)styrene-block(b)-polyalkylene oxide copolymer being reacted to give phosphoric ester groups and the phosphorus atoms, depending on the chosen stoichiometric proportions, being mono- and/or diesterified,
or
b) by reacting polystyrene oxide-block(b)-polyalkylene oxide copolymers obtainable starting from a monofunctional starter alcohol by sequential addition of styrene oxide and of an alkylene oxide in accordance with the desired sequence and chain length of the individual segments with a phosphorous compound which forms phosphoric esters, in the manner described in a).

6. The use of a phosphoric ester as claimed in any one of Claims 1 to 4 as a dispersant for pigments and fillers in aqueous or organic media.

7. The use of a phosphoric ester as claimed in any one of Claims 1 to 4 as a dispersant for the preparation of highly filled sheet and bulk moulding compounds.

8. A pigment preparation comprising organic or inorganic pigments and from 0.1 to 200% by weight, based on pigments, of a dispersing additive as set forth in any one of Claims 1 to 4.

9. An aqueous paste comprising organic or inorganic pigments and from 0.1 to 200% by weight, based on pigments, of a dispersing additive as set forth in any one of Claims 1 to 4.

10. A carbon black paste comprising from 0.1 to 200% by weight, based on carbon black, of a dispersing additive as set forth in any one of Claims 1 to 4.

## Revendications

1. Esters d'acide phosphorique de formule générale I 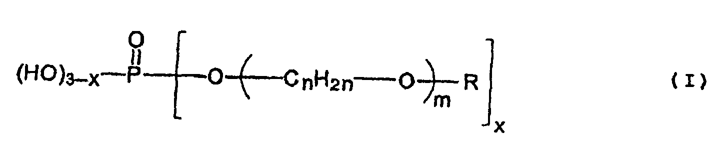 dans laquelle
R est 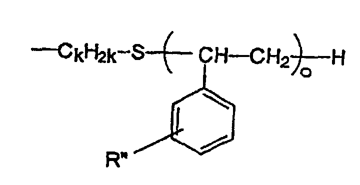 ou 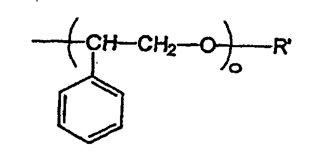
x est égal à 1 ou 2,
n est un nombre allant de 2 à 18,
m et
o représentent un nombre allant de 2 à 100,
k est un nombre allant de 2 à 4,
R" représente H ou un radical alkyle linéaire ou ramifié qui peut éventuellement être substitué par des groupes fonctionnels supplémentaires, et
R' représente un radical alkyle, alkaryle, alcényle ou sulfopropyle.

2. Esters d'acide phosphorique selon la revendication 1, **caractérisés en ce que** le rapport m/o va de 1:10 à 10:1.

3. Esters d'acide phosphorique selon les revendications 1 et 2, **caractérisés en ce que** la masse moléculaire moyenne va de 300 à 15 000 g/mole.

4. Esters d'acide phosphorique selon les revendications 1 à 3, **caractérisés en ce que** R" = H.

5. Procédé pour la préparation des esters d'acide phosphorique selon les revendications 1 à 4,
a) par réaction d'un oligo- ou poly(alkyl)styrène à fonction ω-hydroxy avec un oxyde d'alkylène conduisant à un copolymère poly(alkyl)styrène-séquence (b)-polyoxyalkylène et conversion subséquente en les esters d'acide phosphorique correspondants avec un composé phosphoré générateur d'ester d'acide phosphorique, jusqu'à 100 % des groupes hydroxy terminaux de ces copolymères poly(alkyl)styrène-séquence (b)-polyoxyalkylène étant convertis en groupes ester d'acide phosphorique et les atomes de phosphore, en fonction des rapports stoechiométriques choisis, étant estérifiés une et/ou deux fois,
ou
b) par réaction de copolymères poly(oxyde de styrène)-séquence (b)-polyoxyalkylène qui peuvent être obtenus à partir d'un alcool monofonctionnel de départ, par fixation par addition séquentielle d'oxyde de styrène et d'un oxyde d'alkylène selon la séquence désirée et la longueur de chaîne désirée des segments individuels, avec un composé phosphoré générateur d'ester d'acide phosphorique, de la façon décrite en a).

6. Utilisation des esters d'acide phosphorique selon les revendications 1 à 4, en tant que dispersants pour pigments et charges en milieux aqueux ou organiques.

7. Utilisation des esters d'acide phosphorique selon les revendications 1 à 4, en tant que dispersants pour la préparation de matières à mouler SMC (*sheet molding compounds*) et BMC (*bulk molding compounds*) à forte teneur en charges.

8. Préparation pigmentaire à base de pigments organiques ou minéraux, contenant de 0,1 à 200 % en poids, par rapport aux pigments, d'additifs dispersants selon les revendications 1 à 4.

9. Pâte aqueuse à base de pigments organiques ou minéraux, contenant de 0,1 à 200 % en poids, par rapport aux pigments, d'additifs dispersants selon les revendications 1 à 4.

10. Pâtes aqueuses de noir de carbone, contenant de 0,1 à 200 % en poids, par rapport au noir de carbone, d'additifs dispersants selon les revendications 1 à 4.
